# EUROPEAN PATENT APPLICATION

(11) **EP 1 069 754 A2**
(43) Date of publication of application: **17.01.2001**
(21) Application number: 00104551.7
(22) Date of filing: 13.03.2000
(51) Int. Cl.: H04M 19/08

(54) **Communication interface apparatus**

(30) Priority: 26.05.1999 JP 14597499
(71) Applicant: Hitachi, Ltd., Chiyoda-ku, Tokyo 101-8010 (JP)
(72) Inventor: Kojima, Yasuyuki, 1-5-1 Marunouchi, Chiyoda-ku, Tokyo 100 (JP); Kanekawa, Nobuyasu, 1-5-1 Marunouchi, Chiyoda-ku, Tokyo 100 (JP); Takeuchi, Yusuke, 1-5-1 Marunouchi, Chiyoda-ku, Tokyo 100 (JP); Yukutake, Seigo, 1-5-1 Marunouchi, Chiyoda-ku, Tokyo 100 (JP); Nemoto, Minehiro, 1-5-1 Marunouchi, Chiyoda-ku, Tokyo 100 (JP)
(74) Representative: Beetz & Partner Patentanwälte

(57) **Abstract**

A communication interface apparatus is provided for extending a communication available distance, suppressing the influence of a power receiving circuit on a transmitter/receiver circuit (3), and reducing the cost. The transmitter/receiver circuit is configured in a balanced circuit to enhance the driving capability, so that a sufficient amplitude can be ensured even if a power receiving circuit (8) provides a low received voltage. A low pass filter (LPF) is added in front of the power receiving circuit to eliminate electrical interference between the power receiving circuit and the transmitter/receiver circuit, resulting in improved input impedance frequency characteristics of the power receiving circuit. The LPF is connected to both plus and minus terminals of the power receiving circuit, and bypass capacitor is shared by plus and minus inputs, thereby providing well balanced operation characteristic. A Zener diode may be utilized in the LPF to form a two-stage stabilizing circuit, so that an IC-based voltage regulator can be used even with a high input voltage provided from if the power receiving circuit.

## Description

### BACKGROUND OF THE INVENTION

The present invention relates to a communication interface apparatus which is suitable for operation with electric power received from a communication line.

A communication apparatus (called the "terminal") adapted to operate with electric power received from a communication line (called the "power reception") is utilized for a telephone and a modem unit for use with a telephone line. The electric power is supplied (called the "powering") from a subscriber line interface located in an end office (EO) (hereinafter simply called the "station") For this reason, a terminal located far away from the station is concerned with a lower received voltage due to a loss through the subscriber line, thereby making the terminal inoperative. As a terminal circuit, an IC-based telephone is known.

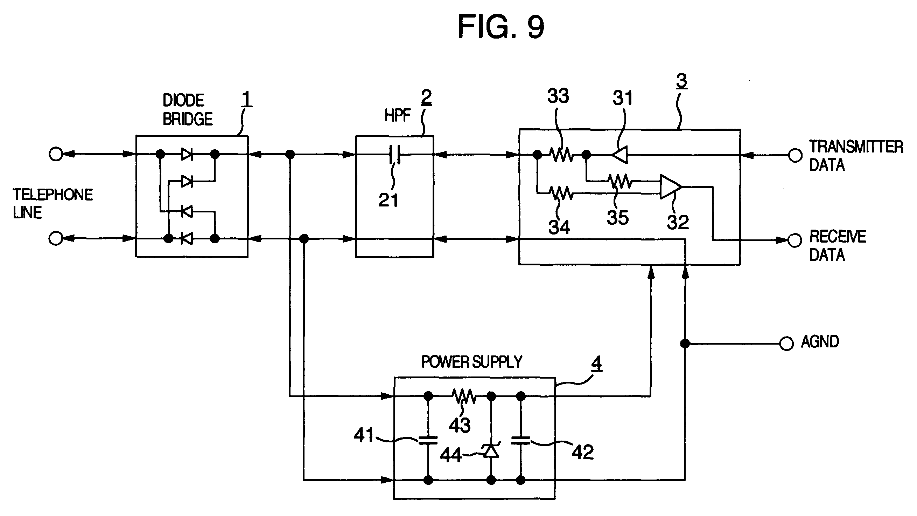

A conventional communication interface is illustrated in Fig. 9. Referring specifically to Fig. 9, the communication interface comprises a diode bridge 1 having a terminal connected to a telephone line; a high pass filter (HPF) 2 having a terminal connected to an output terminal of the diode bridge 1 on one side; a transmitter/receiver circuit 3 having a terminal on one side connected to an output terminal of the HPF 2 and a terminal on the other side connected to a signal processing unit; and a power receiving circuit 4 which receives the output of the diode bridge 1 to supply the transmitter/receiver circuit 3 with a stabilized direct current output.

The diode bridge 1, which contains four diodes, uses a generally called alternating current input side as a terminal to the telephone line, and a direct current output side as an opposite terminal.

The HPF 2 includes a capacitor 21 having the capacitance of approximately 1 µF which is combined with a terminator of the subsequent transmitter/receiver circuit 3 or of a destination terminal connected through the line to exhibit an appropriate HPF characteristic.

The transmitter/receiver circuit 3 includes a transmission amplifier 31, a reception amplifier 32, a transmission terminator 33, and input resistors 34, 35, all of which are connected as illustrated to provide a two-line to four-line conversion function.

The power receiving circuit 4 includes an input capacitor 41 having a capacitance small enough to exert no influence on the characteristic of the transmitter/receiver circuit 3, an output capacitor 42 having a large capacitance of approximately 1 µF, a resistor 43, and a Zener diode 44.

The power receiving circuit 4, adapted to receive an alternating current transmission signal, and has a signal termination circuit formed in an unbalanced configuration. Specifically, one of two balanced lines is referenced, while the other line is driven for transmission, and a received signal is detected from the other line during reception.

### SUMMARY OF THE INVENTION

A transmission output signal of the transmitter/receiver circuit 3 has an amplitude generally smaller than a power supply voltage, so that if the terminal is located far away from a station, together with its ability of receiving only a low voltage, a communication available range is limited.

Also, although the power receiving circuit 4 contains a capacitor of approximately 1 µF to stabilize an output voltage, it is limited to relatively rough applications such as a telephone call due to its inherent stability and noise characteristics.

The application of a high performance voltage regulator circuit is effective in stabilizing an output voltage, and a power receiving circuit provided with a larger output capacitor does increase the stability of the output voltage. However, as the output voltage increases the stability, the input impedance of the power supply becomes smaller than the transmission terminal impedance in a signal frequency range such as several kHz, as will be later described, so that the output signal of the transmitter/receiver circuit 3 is drawn into the power supply, and accordingly the signal cannot be transmitted.

While a voltage regulator has been implemented in IC chip and widely used as a three-terminal regulator and so on, the voltage regulator cannot be used alone in these applications due to large fluctuations in an input voltage to the power receiving circuit 4 depending on the distance between the terminal and a station.

The public communications have become remarkably pervasive, and a need exists for extending the communication serviceable range, i.e., increasing the communication distance. An extended communication distance may be accomplished by increasing the amplitude of transmission signal. While a larger amplitude of transmission signal may be accomplished by increasing a supply voltage, an increase in supply voltage is limited in the conventional terminal adapted to operate with the power supplied from the station.

In view of the problem mentioned above, it is an object of the present invention to provide a communication interface apparatus having power receiving means which is capable of improving the communication performance.

The communication interface apparatus according to the present invention utilizes any of the following means alone or some of them in combination.

Transmitting/receiving means is configured in a balanced circuit so that a sufficient amplitude can be ensured even if a power receiving circuit provides a low received voltage.

A low pass filter (LPF) is added in front of the power receiving circuit to eliminate electrical interference between the power receiving means and the transmitting/receiving means, resulting in improved input impedance frequency characteristics of the power receiving means.

In the balanced circuit, the LPF is connected to both plus and minus inputs of the power receiving circuit such that a bypass capacitor is shared by the plus and minus inputs, thereby providing a circuit exhibiting well balanced operation characteristic.

A Zener diode is utilized in the LPF to form a two-stage stabilizing circuit, so that an IC-based voltage regulator can be used even with a high input voltage provided from the power receiving circuit.

### BRIEF DESCRIPTION OF THE DRAWINGS

Fig. 1 is a functional block diagram generally illustrating a line interface circuit according to an embodiment of the present invention;
Fig. 2 shows the frequency characteristics for the input impedances of components in the line interface circuit of Fig. 1;
Fig. 3 a circuit diagram illustrating the line interface circuit of Fig. 1 in greater detail;
Fig. 4 is a circuit diagram illustrating a line interface circuit according to another embodiment of the present invention;
Fig. 5 is a circuit diagram illustrating a line interface circuit according to a further embodiment of the present invention;
Fig. 6 is a circuit diagram illustrating a line interface circuit according to a further embodiment of the present invention;
Fig. 7 is a functional block diagram illustrating a line interface circuit according to another embodiment of the present invention;
Fig. 8 is a functional block diagram illustrating a further embodiment of the present invention which is used in a modem system; and
Fig. 9 is a block diagram illustrating a conventional communication interface.
Fig. 10 is a block diagram illustrating a line interface circuit according to another embodiment of the present invention.

### DETAILED DESCRIPTION OF THE EMBODIMENTS

The present invention will hereinafter be described in connection with several embodiments thereof with reference to the accompanying drawings.

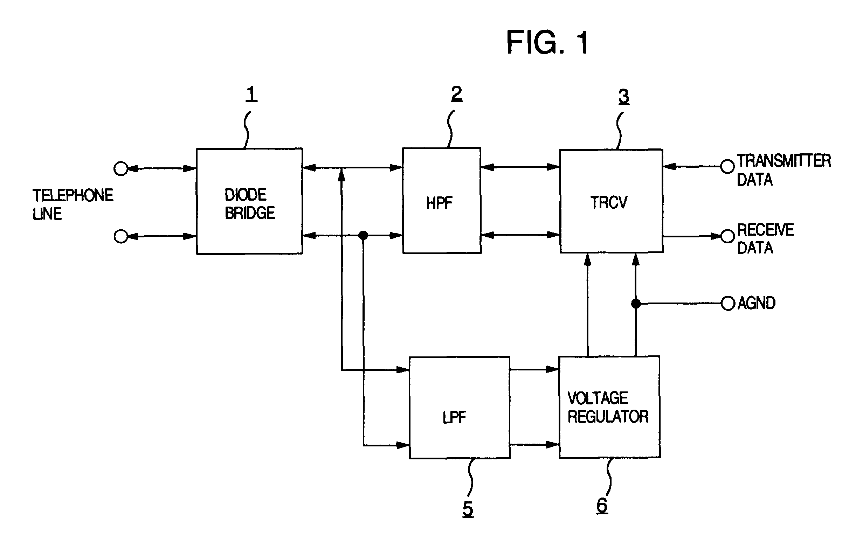

Fig. 1 is a functional block diagram of an embodiment of the present invention which illustrates a line interface circuit contained in a modem device for connection with a telephone line. In the following embodiments, explanation on a protecting means and a direct current blocking means is omitted.

Referring specifically to Fig. 1, the illustrated line interface circuit comprises a diode bridge 1 having a terminal for connection with a telephone line; a high pass filter (HPF) 2 having a terminal connected with an output terminal of the diode bridge 1 on one side; a transmitter/receiver circuit 3 which has a terminal on one side connected to an output terminal of the HPF 2 and a terminal on the other side connected to a signal processing unit; a low pass filter (LPF) 5 which receives the output of the diode bridge 1 and outputs only a direct current component; and a voltage regulator (stabilized power supply) 6 for supplying the transmitter/receiver circuit 3 with a stabilized direct current output. The LPF 5 and the voltage regulator 6 compose a power receiving circuit. The diode bridge 1 and the HPF 2 are substantially similar to those used in a conventional communication interface previously described in conjunction with Fig. 9. A protector circuit is omitted in Fig. 1. Also, in the illustrated circuit, an alternating current transmission signal superimposed with a direct current voltage is inputted to the telephone line.

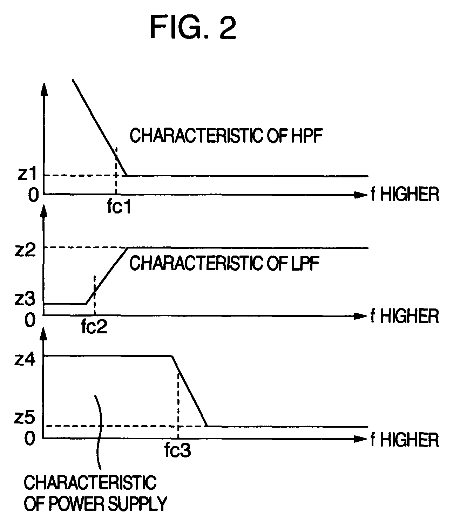

The characteristics of the circuit illustrated in Fig. 1 will be described with reference to Fig. 2. Fig. 2 shows the frequency characteristics for input impedances of the HPF 2, LPF 5 and power supply 7. Z1 indicates a passband impedance of the HPF 2 in which the terminal impedance of the telephone line appears, and its minimum value is 600 ohms in direct current resistance. Z2 indicates the off-band impedance value of the LPF 5 which is tens of kilo-ohms or more. Z3 indicates the passband impedance value of the LPF 5 which is several ohms or less in simple characteristic. Z4 indicates the direct current impedance value of the power supply which is several hundred kilo-ohms or more. Z5 indicates the input impedance of the power supply near the signal frequency which is on the order of several tens of ohms. In Fig. 2, a cut-off frequency fc is indicated for each of the HPF 2, LPF 5 and power supply 7. Specifically, the cut-off frequency fc1 of the HPF 2 and the cut-off frequency fc2 of the LPF 6 are set sufficiently lower than the cut-off frequency fc3 of the voltage regulator 7 (on the order of 1/100 or less). When observing the impedance from the transmitter/receiver circuit 3 to the line with the connection relationship as described above, viewed through the HPF2 are a parallel impedance of an impedance resulting from a cascade connection of the diode bridge 1, the telephone line and the station, and an impedance resulting from a cascade connection of the LPF 5 and the voltage regulator 6.

By designing the configuration and characteristics of this embodiment as described above, the impedance observed from the transmitter/receiver circuit 3 is eventually equal to the impedance value of a line load through the HPF 2, thus avoiding such a phenomenon that the power receiving circuit acts as a load to absorb a transmission signal outputted from the transmitter/receiver circuit 3 in a lower frequency band.

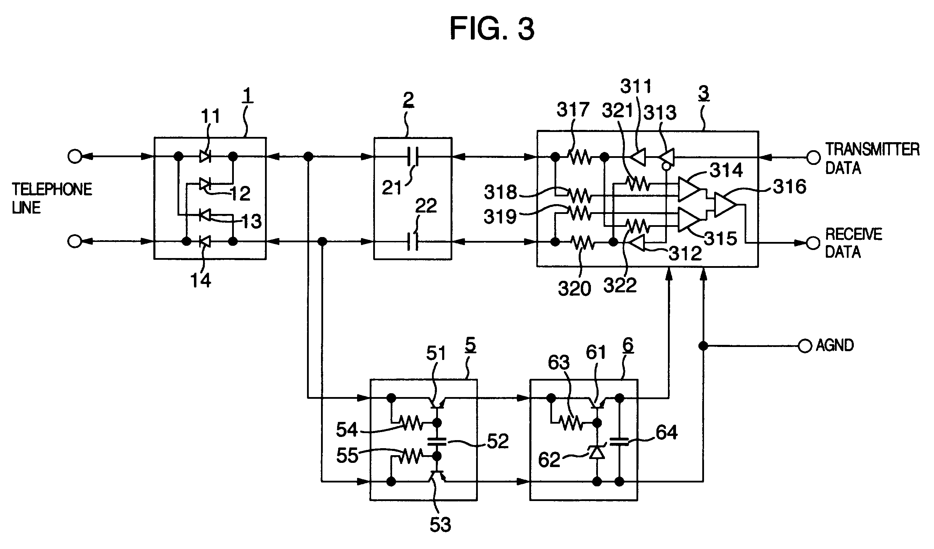

Fig. 3 is a circuit diagram illustrating the line interface circuit of Fig. 1 in greater detail. Referring specifically to Fig. 3, the line interface circuit comprises a diode bridge 1; an HPF 2; a transmitter/receiver circuit 3; an LPF 5; and a voltage regulator 6. The diode bridge 1 is implemented by Schottky barrier diodes to reduce an ON-voltage to approximately one half as much as that of ordinary rectifying diodes. The HPF 2 has 10-µF capacitors 21, 22 in input and output lines, respectively. The transmitter/receiver circuit 3 includes transmission amplifier 311, 312; a complementary signal generator circuit 313; reception amplifiers 314, 315; an operational amplifier 316; and resistors 317 - 321. The resistors 317, 320 are 300-ohm terminators. The transmission amplifiers 311, 312 drive both sides of two lines (this is called the "balanced driving"). Input signals to the transmission amplifiers 311, 312 are complementary signals generated by the complementary signal generator 313 to which a transmission signal is inputted (from a transmitter data terminal). The resistors 318, 319, which have the value of 20 kilo-ohms, function to lead a received signal to one of terminals of the associated reception amplifiers 314, 315, while the resistors 321, 322 function to lead the transmission signal to the other terminals of the associated reception amplifiers 314, 315. Thus, the reception amplifiers 314, 315 act to remove the transmission signal from the received signal when the impedance matching is established with the line side. The outputs of the reception amplifiers 314, 315 are subtracted in the operational amplifier 316 to remove common mode noise therefrom, so that only a reception output signal remains. The LPF 5 is composed of a transistor 51; a common bypass capacitor 52 of approximately 1 µF; a transistor 53; and resistors 54, 55 of several kilo-ohms, and is configured to connect the collectors of the transistors 51, 53 on both sides of its input. The cut-off frequency fc2 of the LPF 5 can be determined by calculating the time constant from the resistance of the resistor 54 or 55 and the capacitance of the common bypass capacitor 52. The output of the LPF 5 is inputted to the voltage regulator 6. The voltage regulator 6 is composed of a Zener diode 62 for generating a reference voltage for the transistor 61; a bias resistor 63 of approximately 100 kilo-ohms; and an output capacitance 64 of approximately 50 µF.

While the operation of the stabilized power supply circuit is well known and detailed description thereon is omitted, the cut-off frequency of the impedance viewed from the input terminal of the power supply circuit is as low as on the order of 100 Hz, and merely several tens of ohms in an audio signal frequency band associated with modems. However, since the cut-off frequencies of the HPF 2 and the LPF 5 are at several Hz, the impedance of the power receiving circuit viewed from the transmitter/receiver circuit 3 appears as a high impedance of the HPF2 and the voltage regulator 6 in the vicinity of the direct current below several Hz, and as an impedance of a cut-off band of the LPF 5 in the signal frequency band and higher, so that the power receiving circuit will never affect the operation of the transmitter/receiver circuit 3.

It should be noted that since the transmitter/receiver circuit 3 is configured as a balanced circuit, a transmission power twice higher than that available from an unbalanced circuit can be obtained from the same power supply voltage, as long as the balanced and unbalanced circuits employ the same internal circuit for their transmission/reception amplifiers. While it has been conventionally known that the balanced circuit exhibits such characteristics, there is not a known example in which a balanced LPF circuit as embodied in the present invention is applied in a circuit which supplies a transmitter/receiver circuit with electric power received from a line.

The LPF 5 implemented by a balanced circuit shares the bypass capacitor for both plus and minus inputs of the power receiving circuit. Such a configuration causes a bypass signal to act also on the circuit on the opposite side to provide an inexpensive circuit which however has good operational balance characteristics.

While this embodiment shows the simplest example of the voltage regulator 6, other high performance circuits may of course be used in the line interface circuit of the present invention. Such high performance voltage regulators may be those including a controlling transistor having a high amplification ratio and exhibiting a good controllability; a reference voltage source having good accuracy and temperature characteristics; an error amplification configuration for detecting the difference between an output voltage and a set voltage to adjust a controlling transistor; and/or a protector circuit for detecting an excessive voltage or an excessive current to protect associated circuits. Such alternative voltage regulators may be implemented irrespective of the form, i.e., in discrete or integrated circuit.

In this embodiment, a protector circuit is omitted, as previously mentioned.

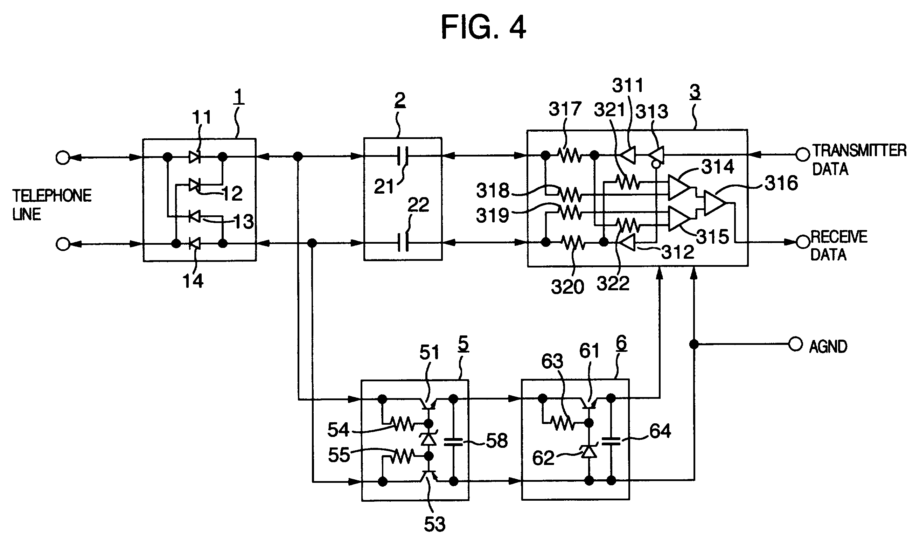

Fig. 4 is a circuit diagram illustrating a line interface circuit according to another embodiment of the present invention. The line interface circuit of Fig. 4 is identical to that of Fig. 3 except for the LPF 5. The reference numerals in Fig. 4 designate the corresponding components or functions in Fig. 3. The LPF 5 in Fig. 4 differs from the counterpart in Fig. 3 and is characterized in that the bypass capacitor 52 is replaced with a Zener diode (voltage regulating element) 57 having a breakdown voltage of 12 volts, and a small output capacitance 58 of approximately 10 nF is additionally connected. Since the resulting circuit configuration acts not only as an LPF, but also as a stabilized power supply having an output voltage of 12 volts and a high cut-off frequency fc3, the input voltage requirements to the voltage regulator 6 can be relieved.

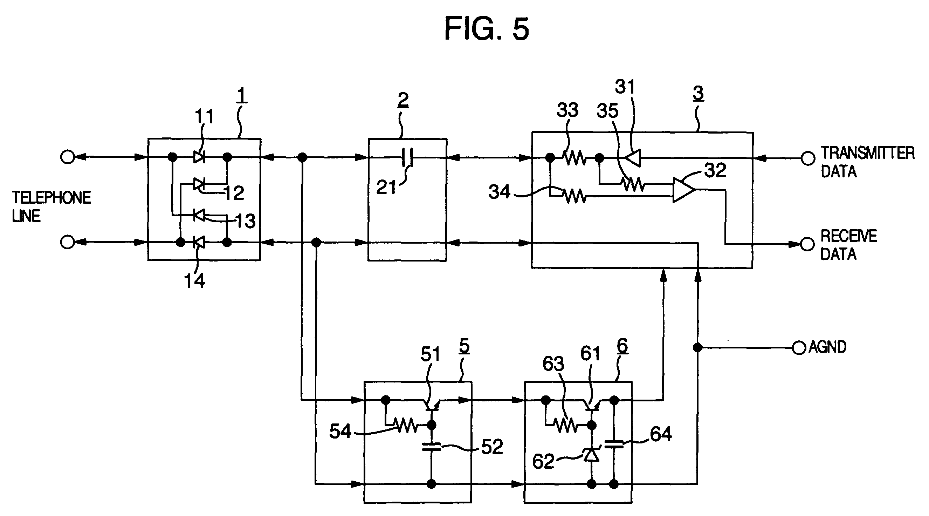

Fig. 5 is a circuit diagram illustrating a line interface circuit according to a further embodiment of the present invention, where the same reference numerals as those in Fig. 3 designate the same components or functions. The line interface circuit of Fig. 5 is characterized by an unbalanced circuit configuration, where the negative output of the diode bridge 1 is connected in common through an HPF 2, a transmitter/receiver circuit 3, an LPF 5, and a voltage regulator 6. In this way, since the HPF 2, transmitter/receiver circuit 3 and LPF 5 may be applied only to the positive output of the diode bridge 1, the line interface circuit of Fig. 5 is advantageous in that the number of circuit elements can be reduced. It should be noted that while the transmitter/receiver circuit 3 in an unbalanced circuit configuration is inferior in driving capability to the counterpart in a balanced circuit configuration, the inferior driving capability will not cause any problem if the driving capability is improved by any appropriate method such as a BiCMOS device, a rail-to-rail amplifier circuit or the like, or if the communication interface is applied to a line of a short distance from a station which can be accommodated within the driving capability of the transmitter/receiver circuit 3.

As one implementation of the LPF, a chalk coil circuit having a core wound with wires may be used. In addition, a so-called electronic chalk coil circuit, which is formed of transistors, resistors and a capacitor, is also known (see for example, "Design of Stabilized Power Supply Circuit," third edition, published by CQ publications on April 20, 1972, Fig. 5.5(d) on page 76, and JP-A-9-200388).

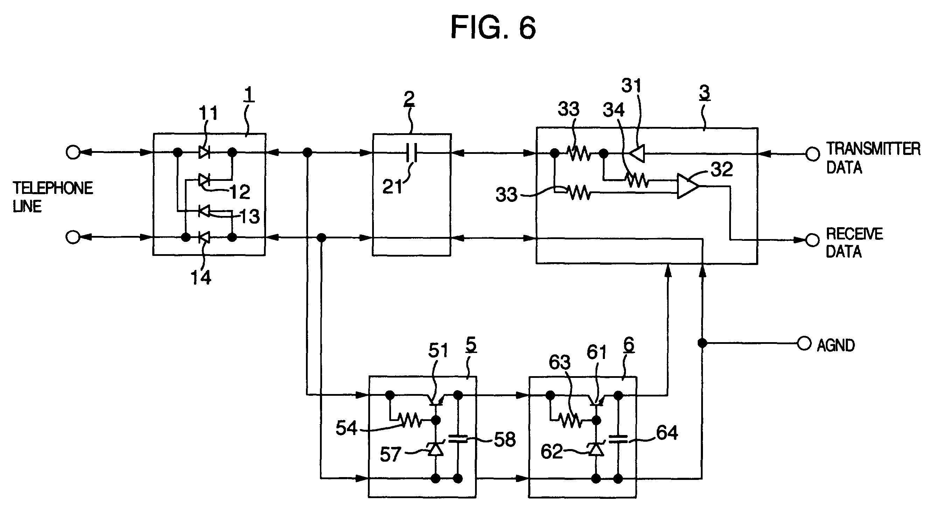

Fig. 6 is a circuit diagram illustrating a line interface circuit according to a further embodiment of the present invention, where the same reference numerals as those in Fig. 5 designate the same components or functions. An LPF 5 in Fig. 6 differs from the counterpart in Fig. 5 and is characterized in that the bypass capacitor 52 is replaced with a Zener diode (voltage regulating element) 57 having a breakdown voltage of 12 volts, and a small output capacitance 58 of approximately 10 nF is additionally connected. Since the resulting circuit configuration acts not only as an LPF, but also as a stabilized power supply having an output voltage of 12 volts and a high cut-off frequency fc3, the input voltage requirements to a voltage regulator 6 can be relieved.

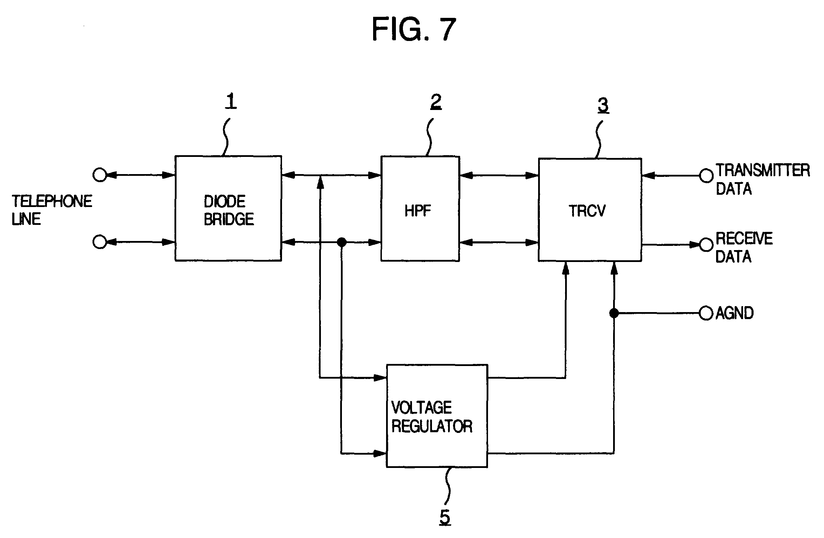

Fig. 7 is a functional block diagram illustrating a line interface circuit according to another embodiment of the present invention. In Fig. 7, a diode bridge 1, an HPF 2 and a transmitter/receiver circuit 3 are identical in function to those in Fig. 1. An improved voltage regulator 7, which is a combination of low pass filtering and voltage regulation functions, simplifies the entire communication interface in configuration as illustrated, making it suitable for implementation as a an IC-based or a modular unit.

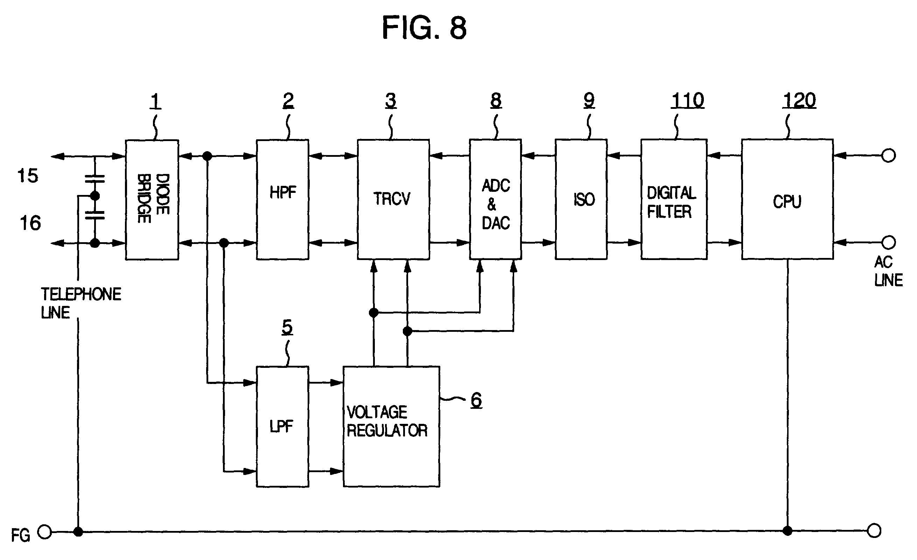

Fig. 8 is a functional block diagram illustrating a further embodiment of the present invention which is used in a modem system. In Fig. 8, components 1 - 6 are identical in name and function to the counterparts in Fig. 1. The modem system of Fig. 8 additionally comprises an audio codec 8 containing an analog-to-digital converter (ADC) and a digital-to-analog converter (DAC); an isolator 9 for transmitting a signal while isolating an input terminal from an output terminal; a digital filter 110; a signal processing unit 120 represented by a host CPU (Central Processing Unit) such as a digital signal processor (DSP), a reduced instruction set processor (RISC) or the like, including a power supply; surge absorbing capacitors 15, 16; and a ground terminal FG which is a frame ground.

The isolator 9 is a circuit block which electrically isolates two circuits from each other but couples a signal between the two circuits. When the isolator 9 is utilized, an analog front end (AFE) can be created without using an insulating transformer. The analog front end is an interface Circuit for a signal processing device, which generally includes ADC for converting an analog signal to a digital signal and/or DAC for converting a digital signal to an analog signal; a bandpass filter means; a level adjusting means; and so on, and is used for a line interface circuit in a modem. In the field of communications, a high isolation property is required to the boundary between a network and a terminal (hereinafter called the "line network") for protecting highly public network facilities and terminals, and small transformers having high isolation properties for communications have been conventionally used to meet the requirement. However, with increasingly widespread personal terminals, a further reduction in size and weight has been required to transformers for use in portable terminals. The requirement to a reduction in size implies problems which cannot be sufficiently responded only by improving the material and structure used in the transformer, so that the application of isolator in personal terminals has been taken into account. Also, for applications in measurement and medical fields, and so on, isolation is often required between a signal detecting portion and a signal processing portion, such as between a sensor and a signal processing circuit, in which case an isolating coupler is known as an isolating or separating means.

While required characteristics are different, the isolator may be inserted between the transmitter/receiver circuit 3 and the audio codec 8. It should be noted that not only the components 1 - 6 but also the components 8, 9 on the telephone line side may be connected to operate with electric power outputted by the power receiving circuit 6.

For transmitting a signal through the modem system, a terminal on the telephone line side is connected to the telephone line, the signal processing unit 120 is powered on to generate a digital modulated signal which is passed through an up-channel of the digital filter 110, an up-channel of the isolator 9, and the DAC of the codec 8 to generate an analog transmission signal which is inputted to a transmitter data terminal of the transmitter/receiver circuit 3. In this way, the circuit components 1 - 8 on the line side become operative to efficiently deliver the transmission signal to the telephone line as previously described in conjunction with Fig. 1. Upon reception, the components may be similarly connected, causing a received signal inputted to the terminal on the telephone line side to appear at a receive data terminal as previously described in conjunction with Fig. 1. Thus, the received signal is converted by the ADC of the codec 8 to a digital signal which is passed through a down-channel of the isolator 9 and a down-channel of the digital filter 110, and inputted to the signal processing unit 120. In the signal processing unit 120, the received signal undergoes processing such as demodulation to eventually provide received data.

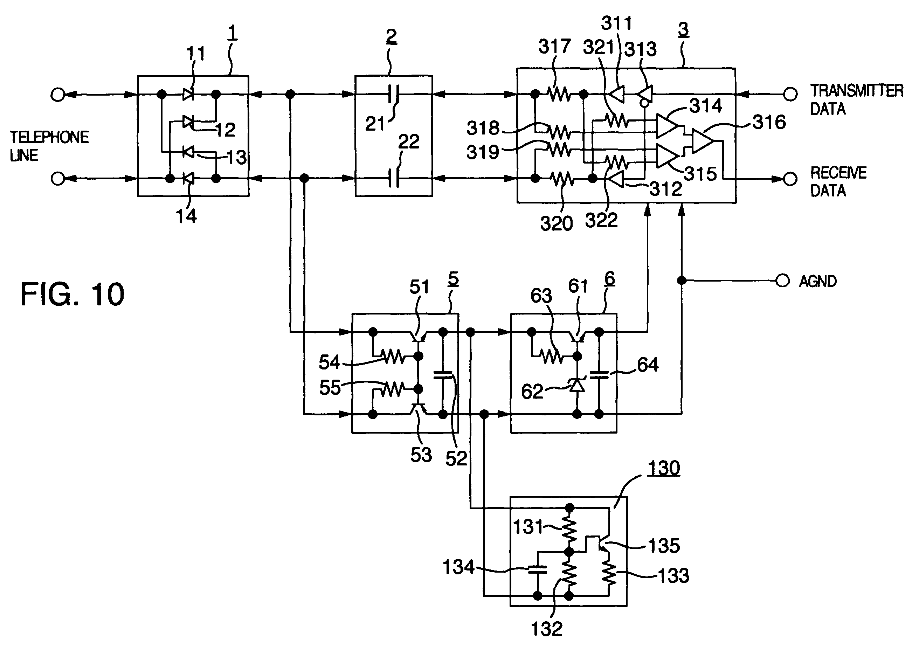

Fig. 10 is a circuit diagram showing another embodiment of a modem to which the present invention is applied. In Fig. 10, reference numerals 1-322 indicate elements having the same function as those in Fig. 6. A reference numeral 130 indicates an DC termination circuit, 131 to 133 resistors, 134 a capacitor and 135 a transistor. The DC termination circuit 130 is formed of a well-known circuit block. The transistor 135 is used to select a large amplification characteristic of the transistor. The resistors 131 and 132 serve as a bias circuit for the transistor and the resistor 132 is connected to the capacitor 134. The resistor 133 is a load for transistor 135. In operation of the termination circuit 130, when the modem is connected to the line, the termination circuit 130 flows only a DC current in response to application of a relevant voltage and exhibits a high impedance to a T transmission signal which is an AC current. The high impedance capability to AC current depends on the capacitor 134 and the amplification factor of the transistor 135.

This circuit is similar to the LPF means stated above. Accordingly, an AC impedance characteristic can be relaxed by providing the LPF means and the power receiving circuit. As a result, the capacitor 134 may be dispensed with or may have a small capacitance value. In other words, the size and the cost of the modem can be reduced.

The DC termination circuit can be integrally combined with the LPF means or the power receiving means. In that case, such combination may contribute the small-sized and low-cost modem, to advantage.

As described above, according to the present invention, an output signal having a large amplitude can be produced even from a low received voltage by the use of a balanced driving circuit, a BiCMOS device, a rail-to-rail driving circuit as a circuit configuration having a high driving performance. Also, an LPF added to a power receiving circuit results in improved input impedance frequency characteristics of the power receiving circuit, and improved output characteristics of a transmitter/receiver circuit. Further, the balanced driving circuit employs an LPF applied to both plus and minus inputs of the power receiving circuit, and a shared bypass capacitor to provide a circuit configuration which is inexpensive but has well balanced operational characteristics. Moreover, an LPF using a Zener diode is added to a voltage regulator to provide an inexpensive two-stage stabilizing circuit, in an IC chip, including low pass filtering and voltage regulating functions, which can accommodate a high input voltage from the power receiving circuit.

The arrangement of a DC termination circuit between the LPF means and the power receiving means can also contribute to reduce the size and cost of the modem.

## Claims

1. A communication interface apparatus comprising:
transmitting/receiving means (3) for transmitting and receiving a signal to and from a communication path;
power receiving means (8) for receiving electric power from said communication path to provide a terminal circuit with the electric power; and
interference preventing means (1, 2, 5) for preventing electrical interference between said power receiving means and said transmitting/receiving means.

2. A communication interface apparatus according to claim 1, wherein:
said interference preventing means is connected between said communication path and a parallel connection of said transmitting/receiving means and said power receiving means;
said communication interface apparatus further includes a low pass filter (5) disposed between said interference preventing means and said power receiving means, and a high pass filter (2) disposed between said interference preventing means and said transmitting/receiving means; and
a cut-off frequency fc1 of said high pass filter and a cut-off frequency fc2 of said low pass filter is lower than a cut-off frequency fc3 of a stabilizing circuit (6) within said power receiving means.

3. A communication interface apparatus according to claim 2, wherein said high pass filter comprises a line impedance and a direct current cutting capacitance.

4. A communication interface apparatus according to claim 2, wherein said transmitting/receiving means is configured in a balanced circuit, and said high pass filter and said low pass filter are arranged in balance.

5. A communication interface apparatus according to claim 2, wherein said low pass filter comprises a transistor (51; 53), a bias resistor (54; 54) and a bypass capacitance (52), a collector of said transistor functions as an input, an emitter of said transistor functions as an output, a base and the collector of said transistor are connected by said bias resistor, and said bypass capacitance is connected to the base of said transistor and another input of said low pass filter.

6. A communication interface circuit according to claim 5, wherein said transmitting/receiving means is configured in a balanced circuit, and said bypass capacitance is shared.

7. A communication interface apparatus according to claim 2, wherein said low pass filter comprises a transistor (51), a bias resistor (54) and a voltage regulating element (57), a collector of said transistor functions as an input, an emitter of said transistor functions as an output, a base and the collector of said transistor are connected by said bias resistor, and said voltage regulating element is connected to the base of said transistor and another input of said low pass filter.

8. A communication interface apparatus according to claim 7, wherein said transmitting/receiving means is configured in a balanced circuit, said low pass filter is configured in a balanced circuit, and said voltage regulating element is shared.

9. A communication interface apparatus according to claim 1, further comprising:
an analog filter, an analog-to-digital converter circuit (8), a digital filter (110) and a signal processing circuit (120) arranged serially in order and connected to on one side of said transmitting/receiving means opposite to said communication path; and
an isolator (9) disposed between any adjacent two of said digital filter, said analog-to-digital converter circuit, said digital filter and said signal processing circuit for isolating circuit components associated with said communication path from circuit components associated with said signal processing unit,
wherein said power receiving means supplies electric power to said components associated with said communication path isolated by said isolator from said circuit components associated with said signal processing unit.

10. A communication interface apparatus according to claim 9, further comprising a DC termination circuit provided between said low pass filter and said power receiving means or to either of them, in said circuit components associated with said communication path isolated by said isolator from said circuit components associated with said signal processing unit.

11. A communication interface apparatus comprising:
means (6) for receiving electric power from a line;
transmitting/receiving means (3) for driving the line to send a signal thereto; and
means (1) for blocking a direct current voltage when said transmitting/receiving means is coupled to said line,
wherein at least said transmitting/receiving means is configured in a balanced circuit.
